# EUROPEAN PATENT SPECIFICATION

(11) **EP 1 358 313 B1**
(45) Date of publication and mention of the grant of the patent: **07.09.2005**
(21) Application number: 02734879.6
(22) Date of filing: 22.01.2002
(51) Int. Cl.: C12G 1/022

(54) **VINIFICATION MACHINE**
ANLAGE ZUR WEINHERSTELLUNG
DISPOSITIF DE VINIFICATION

(30) Priority: 24.01.2001 IT UD20010013 U
(43) Date of publication of application: 05.11.2003
(73) Proprietor: Gortani Srl, 33020 Amaro (UD) (IT)
(72) Inventor: GORTANI, Gian, Paolo, I-33022 Arta Terme (IT)
(74) Representative: Petraz, Gilberto Luigi
(86) International application number: PCT/IB2002/000164
(87) International publication number: WO 2002/059249

(56) References cited:
- EP-A- 0 916 723
- DE-A- 3 623 694
- DE-A- 19 517 937
- FR-A- 2 324 538
- FR-A- 2 359 205
- FR-A- 2 767 333

## Description

### FIELD OF THE INVENTION

The invention concerns a machine to achieve the vinification of grapes, taking the solid part of the must, consisting of the skins, into immersion in the underlying liquid part of the must so as to improve the quality of the wine.

### BACKGROUND OF THE INVENTION

It is well-known that the fermentation of grapes, during which chemical processes occur to break down the sugars and to transform the glucose into ethyl alcohol, is made advantageously inside closed containers.

Due to a perfectly natural phenomenon, the liquid part of the must descends to the bottom, while the solid part, which is lighter, floats on top of the liquid. Normally the thickness of the solid part is about 1/3 of the overall height of the must, so that in containers several meters high, the thickness of the solid part can reach and exceed 70 cm, thus achieving a spongy mass which is very compact and difficult to penetrate.

It is known a vinification machine consisting substantially of a steel drum, several metres high, inside which a pair of pressure elements, each one consisting of a metal grid, moved by a pneumatic actuator, thrusts the solid part of the must towards the underlying liquid part thereof. The immersion of the solid part of the must into its liquid part allows the substances in the skins to mix with the liquid part of the must and thus improve the quality of the wine.

In this conventional machine, the pneumatic actuators are arranged vertically above the drum, and are of limited size so as to restrict the overall space occupied by the machine. In fact, such machines are able to be located in already existing cellars, which have ceilings which can constitute a limit to the installation of the machine. Actuators of reduced size have a limited power and are only able to thrust solid masses with a thickness limited to a few centimetres.

It would in fact need a thrust of about 10,000 Kg to thrust a mass of grape skins with a thickness of about 70-80 cm inside the liquid, and this could only be obtained with pneumatic actuators of considerable size.

Another disadvantage of conventional machines is that each metal grid is mounted cantilevered at the end of the rod of the corresponding actuator, so that the rods are subject to heavy combined bending and compressive stresses and hence tend to bend with use.

Examples of such known a vinification machine may be found in the following documents: FR-A-2 359 205; DE-A-195 17 937; DE-A-36 23 694; EP-A- 0 916 723; FR-A-2 767 333.

The present Applicant has devised and embodied this invention to overcome these shortcomings of conventional machines, and to obtain further advantages.

### SUMMARY OF THE INVENTION

The vinification machine according to the invention is set forth and characterized in the main claim, while the dependent claims describe other innovative characteristics of the invention.

One purpose of the invention is to achieve a vinification machine wherein the solid layer of the must can be of considerable thickness, in the region of several tens of centimetres (for example 70 cm and more) and that it can be thrust totally inside the liquid part of the must, without using large-size command means. At the same time the machine must be provided with pressure means with sufficient power and depth of action, without affecting excessively the spaces outside the tank in which the must is contained.

In accordance with such purposes, the vinification machine according to the invention comprises a tank, substantially cylindrical in shape, possibly provided with an upper aperture through which the must is able to be inserted, and a lower aperture through which it is removed.

Inside the tank pressure means are positioned horizontally and thrust the solid part downwards, and command means which displace the pressure means vertically.

The command means comprise at least a screw element arranged vertically and able to couple with the pressure means, and a drive member able to make the screw element rotate, by means of a reducer, so that the pressure means are displaced vertically. In this way we achieve a mechanical jack.

The pressure means comprise at least a substantially H-shaped frame on which a plurality of mobile cross-pieces is hinged. To be more exact, the mobile cross-pieces can move from a position substantially perpendicular to the frame to a position substantially parallel to the frame, so as to encourage the thrust action on the mass to be pressed and the subsequent release.

The frame also comprises a nut, arranged in proximity with the baricenter thereof, advantageously made of self-lubricating material and able to screw onto a screw element.

When the drive member makes the screw element rotate, the frame ascends or descends according to the direction of rotation, thus transferring a thrust onto the solid part of the must. Moreover, the frame can also act in depth, as deep as the screw element is long.

### BRIEF DESCRIPTION OF THE DRAWINGS

These and other characteristics of the invention will be clear from the following description of a preferential form of embodiment, given as a non-restrictive example with reference to the attached drawings wherein:
- Fig. 1: is a front sectioned view of a vinification machine according to the invention;
- Fig. 2: shows a detail seen in plane view of the device in Fig. 1;
- Fig. 3: shows a detail of Fig. 2 in a front view;
- Fig. 4: shows a variant of the device in Fig. 1.

### DETAILED DESCRIPTION OF A PREFERRED EMBODIMENT

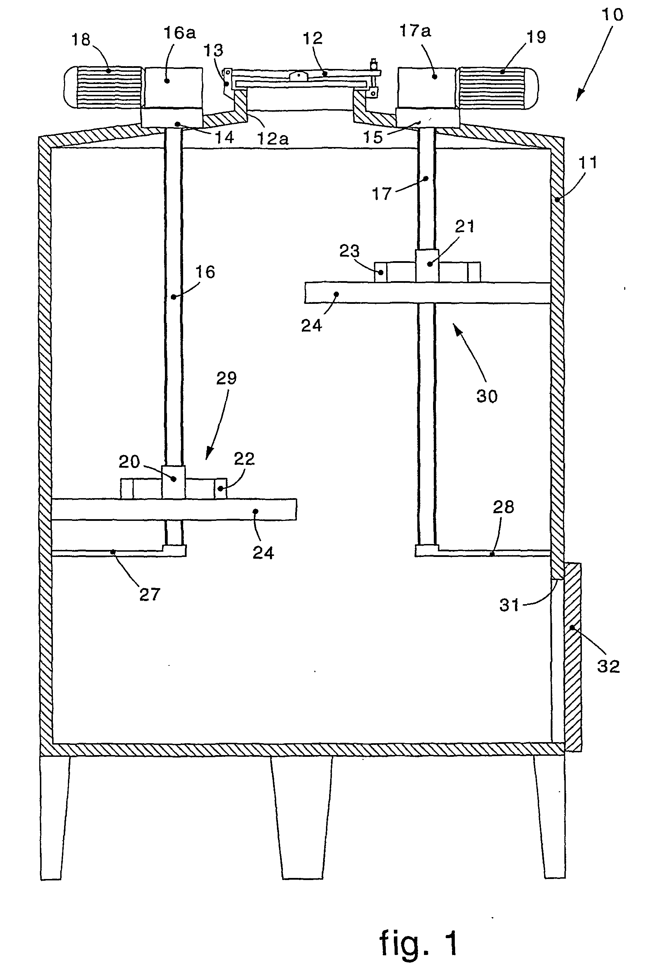

With reference to Fig. 1, a vinification machine 10 according to the invention comprises a closed tank or drum 11, advantageously made of stainless steel, substantially cylindrical in shape, and having on its upper wall a loading hole 12a through which the must is inserted. The hole 12a is selectively able to be opened by means of a lid or cover 12, hinged to the outer surface of the drum 11 by means of a hinge 13; at the bottom the drum 11 is provided with a discharge hole 31 through which the must is extracted after vinification and which can be selectively closed by means of a door 32.

A pair of metal screws 16 and 17, substantially identical and able to rotate, is attached to the upper part of the drum 11, in this case by means of a corresponding pair of steel flanges 14 and 15. The lower ends of the screws 16 and 17 are guided into corresponding seatings made on transverse supporting rods 27 and 28 welded inside the drum 11 and able to prevent said screws 16 and 17 from oscillating.

The screws 16 and 17 are connected mechanically by means of reducers 16a and 17a to corresponding electric motors 18 and 19 arranged on the upper outer surface of the drum 11, each one having advantageously a power of from 1 Kw to 2 Kw. This connection between the screws 16 and 17, the reducers 16a and 17a and the motors 18 and 19 substantially forms two mechanical thrust jacks.

The two motors 18 and 19 are advantageously connected to a control unit, of a conventional type and not shown in the drawings, such as for example a PLC, which manages the drive thereof in a manner which can be programmed by the user.

Each of the screws 16 and 17 is associated with a relative pressure element 29, 30 and is able to displace it vertically.

Each pressure element 29, 30 is guided between the inner walls of the drum 11 during its displacement and comprises a substantially H-shaped frame 22, 23 and a threaded nut 20, 21 attached to the corresponding frame 22, 23 by means of screws, not shown, in proximity with its baricenter.

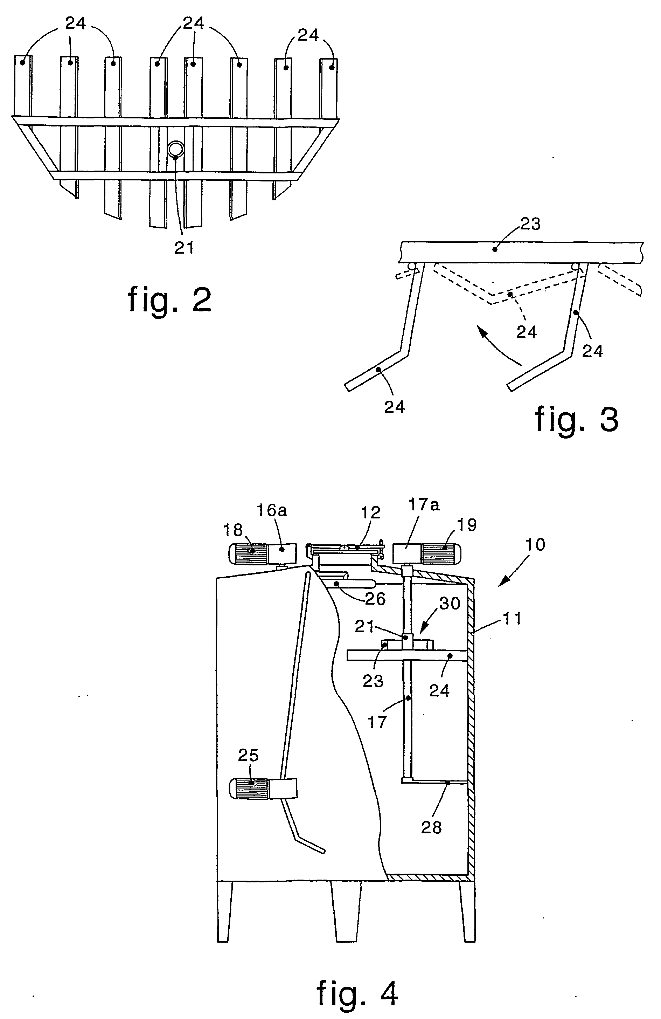

A plurality of cross-pieces 24 (Fig. 2), in this case eight for each of the two frames 22 and 23, are hinged transversely to each frame 22, 23, so as to form two substantially crescent-shaped symmetrical structures. The cross-pieces 24 are able to be arranged in a position substantially parallel to the corresponding frame 22, 23 when the latter is descending inside the must, and in a position substantially perpendicular to the corresponding frame 22, 23 when the latter is in any other position provided.

The vinification machine 10 as described heretofore functions as follows.

The drum 11 has a height of about 3 m and is filled through the loading hole 12a to about 3/4 of its height (that is, about 200-240 cm) with the must. After some time, the must separates, and a liquid part equal to about 2/3 of the height of the must (about 150 cm) is deposited on the bottom, while the remaining third (about 75 cm) consists of the grape skins.

By activating the electric motors 18 and 19, the screws 16 and 17 are made to rotate, and move the pressure elements 29 and 30 towards the bottom, each of which exerts a thrust of about 10,000 kg on the solid part.

Moreover, when the frames 22 and 23 of the respective pressure elements 29 and 30 come into contact with the solid part, the cross-pieces 24 are arranged substantially parallel to the corresponding frame 22, 23, so as to increase the surface of contact between the pressure elements 29 and 30 and said solid part.

The thrust imparted causes the liquid part of the must to filter between the grape skins, and to acquire color and substances which improve the quality of the wine.

By inverting the rotation of the screws 16 and 17, the frames 22 and 23 re-ascend, at a speed of about 540 mm/min, and the cross-pieces 24 return to a position substantially perpendicular to the corresponding frame 22, 23, so as to encourage the rise of the solid part above the liquid part of the must.

Moreover, the presence of the two electric motors 18 and 19 enables the screws 16 and 17 to move independently from each other and hence it can be decided to move the two frames 22 and 23 in alternation.

It is clear however that modifications or additions of parts can be made to the vinification machine 10 as described heretofore, without departing from the spirit and scope of the invention.

For example, as shown in Fig. 4, a lifting pump 25 can be provided, arranged outside the drum 11, and able to spray the solid part with liquid must taken from the lower part of the drum 11, by means of a sprayer 26 arranged inside the drum 11.

It is also clear that, although the invention has been described with reference to two specific examples, a skilled person shall certainly be able to achieve many other equivalent forms of vinification machines, all of which shall come within the field and scope of this invention.

## Claims

1. Vinification machine comprising a tank (11) able to contain must, pressure means (29, 30) arranged inside said tank (11) and able to thrust the solid part of the must downwards and command means able to displace said pressure means (29, 30) vertically, wherein said command means comprise at least a screw element (16, 17) arranged vertically and able to couple with said pressure means (29, 30) and a drive member (16a, 17a, 18, 19) able to make said screw element (16, 17) rotate to achieve the vertical displacement of said pressure means (29, 30), **characterised in that** said screw element (16, 17) is disposed inside said tank (11) and is rotatably mounted on a flange element (14, 15) which is fixed to said tank (11) and is able to constrain said screw element (16, 17) vertically and at the same time to permit the free rotation thereof, and **in that** said pressure means (29, 30) comprises a horizontal structure on which a nut (20, 21) is mounted to screw onto said screw element (16, 17).

2. Machine as in claim 1, **characterized in that** said nut (20, 21) is made of self-lubricating material.

3. Machine as in claim 1, **characterized in that** said screw element (16, 17) is supported, at its lower end, by at least a supporting element (27, 28) attached to the inner surface of said tank (11).

4. Machine as in claim 1, **characterized in that** said pressure means (29, 30) comprise at least a frame (22, 23), substantially H-shaped, to which a plurality of cross-pieces (24) is able to be hinged transversely so that the latter assume an orientation which can vary from a position substantially perpendicular to said frame (22, 23), to a position substantially horizontal to said frame (22, 23).

5. Machine as in claim 1, **characterized in that** said tank (11) is substantially cylindrical in shape and comprises at the upper part at least a loading hole (12a) which can be selectively closed by means of a corresponding lid (12) and at the lower part a discharge aperture (31) which can be closed by means of a corresponding door (32).

6. Machine as in claim 1, **characterized in that** said drive member comprises an electric motor (18, 19) with which a mechanical reducer (16a, 17a) is associated.

7. Machine as in claim 6, **characterized in that** a control unit is able to be connected to said electric motor (18, 19) so as to cyclically manage the rotation of said screw element (16, 17).

8. Machine as in claim 1, **characterized in that** a lifting pump (25) is associated with said tank (11) and is able to cooperate with said pressure means (29, 30) to perform said vinification.

## Patentansprüche

1. Anlage zur Weinherstellung, mit einem Tank (11) zur Aufnahme von Most, innerhalb des Tankes (11) angeordneten Praßmitteln (29, 30), die den festen Teil des Mostes nach unten drücken können, und Steuermitteln zur vertikalen Verlagerung dieser Preßmittel (29, 30), wobei diese Steuermittel mindestens ein vertikales Schraubelement (16,17) aufweisen, das mit den Preßmitteln (29, 3 0) gekuppelt werden kann, sowie ein Antriebsglied (16a, 17a, 18,19), welches das Schraubelement (16, 17) drehen kann, um die vertikale Verlagerung der Preßmittel (29, 30) zu erreichen, **dadurch gekennzeichnet, dass** das Schraubelement (16, 17) innerhalb des Tankes (11) drehbar an einem Flanschelement (14, 15) angeordnet ist, das am Tank (11) befestigt ist und das Schraubelement (16, 17) vertikal hält sowie gleichzeitig dessen freie Drehung ermöglicht, und dass weiters die PreBmittel (29, 30) eine horizontale Struktur aufweisen, an der eine Mutter (20, 21) zum Einschrauben in das Schraubelement (16, 17) angeordnet ist.

2. Anlage nach Anspruch 1, **dadurch gekennzeichnet, dass** die Mutter (20, 21) aus selbstschmierendem Material besteht.

3. Anlage nach Anspruch 1, **dadurch gekennzeichnet, dass** das Schraubelement (16, 17) an seinem unteren Ende durch mindestens ein an der inneren Oberfläche des Tankes (11) befestigtes Tragelement (27, 28) getragen wird.

4. Anlage nach Anspruch 1, **dadurch gekennzeichnet, dass** die Preßmittel (29, 30) mindestens einen im wesentlichen H-förmigen Rahmen (22, 23) aufweisen, an dem eine Mehrzahl von Kreuzstücken (24) quer angelenkt sind, so dass letztere eine Ausrichtung annehmen können, die von einer im wesentlichen quer zum Rahmen (22, 23) gerichteten Stellung zu einer Stellung im wesentlichen horizontal zum Rahmen (22, 23) variieren kann.

5. Anlage nach Anspruch 1, **dadurch gekennzeichnet, dass** der Tank (11) im wesentlichen zylindrisch ausgebildet ist und an seinem oberen Teil mindestens eine Beladeöffnung (12a) aufweist, die durch einen entsprechenden Deckel (12) geschlossen werden kann, und am unteren Teil eine Entladeöffnung (31) vorgesehen ist, die mittels einer entsprechenden Tür (32) geschlossen werden kann.

6. Anlage nach Anspruch 1, **dadurch gekennzeichnet, dass** das Antriebsglied einen elektrischen Motor (18, 19) aufweist, dem ein mechanisches Reduktionsgetriebe (16a, 17a) zugeordnet ist.

7. Anlage nach Anspruch 6, **dadurch gekennzeichnet, dass** mit dem Elektromotor (18, 19) eine Steuereinheit verbunden werden kann, um die Drehung des Schraubelementes (16, 17) zyklisch steuern zu können.

8. Anlage nach Anspruch 1, **dadurch gekennzeichnet, dass** dem Tank (11) eine Hebepumpe (25) zugeordnet ist, die mit den Preßmitteln (29, 30) zusammenarbeiten kann, um die Weinherstellung durchführen zu können.

## Revendications

1. Dispositif de vinification comprenant un réservoir (11) pouvant contenir du moût, des moyens de pressurage (29, 30) installés à l'intérieur dudit réservoir (11) et capables de pousser la partie solide du moût vers le bas, et des moyens de commande capables de déplacer verticalement lesdits moyens de pressurage (29, 30), dans lequel lesdits moyens de commande comprennent au moins un élément de vissage (16, 17) installé verticalement et pouvant se coupler auxdits moyens de pressurage (29, 30) et un élément d'entraînement (16a, 17a, 18, 19) capable de faire tourner ledit élément de vissage (16, 17) pour réaliser le déplacement vertical desdits moyens de pressurage (29, 30), dispositif **caractérisé en ce que** ledit élément de vissage (16, 17) est disposé à l'intérieur dudit réservoir (11) et est monté tournant sur une bride d'assemblage (14, 15) qui est fixée audit réservoir (11) et est capable de contraindre ledit élément de vissage (16, 17) dans le sens vertical et, simultanément, de permettre la libre rotation de ce dernier, et **en ce que** lesdits moyens de pressurage (29, 30) comprennent une structure horizontale sur laquelle est monté un écrou (20, 21) destiné à se visser sur ledit élément de vissage (16, 17).

2. Dispositif selon la revendication 1, **caractérisé en ce que** ledit écrou (20, 21) est constitué de matériau autolubrifiant.

3. Dispositif selon la revendication 1, **caractérisé en ce que** ledit élément de vissage (16, 17) est supporté, à son extrémité inférieure, par au moins un élément de support (27, 28) fixé à la surface intérieure dudit réservoir (11).

4. Dispositif selon la revendication 1, **caractérisé en ce que** lesdits moyens de pressurage (29, 30) comprennent au moins un cadre (22, 23) sensiblement en forme de H, sur lequel peuvent s'articuler transversalement une pluralité de traverses (24), de sorte que ces dernières puissent prendre une orientation pouvant varier d'une position sensiblement perpendiculaire audit cadre (22, 23) à une position sensiblement horizontale par rapport audit cadre (22, 23).

5. Dispositif selon la revendication 1, **caractérisé en ce que** ledit réservoir (11) est de forme sensiblement cylindrique et comprend, au niveau de sa partie haute, au moins un trou de chargement (12a) qui peut être fermé de manière sélective au moyen d'un couvercle correspondant (12) et, au niveau de sa partie basse, une ouverture de décharge (31) qui peut être fermée au moyen d'une porte correspondante (32).

6. Dispositif selon la revendication 1, **caractérisé en ce que** ledit élément d'entraînement comprend un moteur électrique (18, 19) auquel est associé un réducteur mécanique (16a, 17a).

7. Dispositif selon la revendication 6, **caractérisé en ce qu'**une unité de commande peut être reliée audit moteur électrique (18, 19), de manière à gérer de façon cyclique la rotation dudit élément de vissage (16, 17).

8. Dispositif selon la revendication 1, **caractérisé en ce qu'**une pompe de remontage (25) est associée audit réservoir (11) et peut coopérer avec lesdits moyens de pressurage (29, 3 0) afin de réaliser ladite vinification.
